# EUROPÄISCHE PATENTSCHRIFT

(11) **EP 4 118 056 B1**
(45) Veröffentlichungstag und Bekanntmachung des Hinweises auf die Patenterteilung: **11.10.2023**
(21) Anmeldenummer: 20710893.7
(22) Anmeldetag: 10.03.2020
(51) Int. Cl.: C04B 28/06, C04B 38/10, C04B 103/48

(54) **VERFAHREN ZUR HERSTELLUNG VON SCHAUMBETON**
PROCESSES FOR PRODUCING FOAMED CONCRETE
PROCÉDÉS DE PRODUCTION DE BÉTON EXPANSÉ

(43) Veröffentlichungstag der Anmeldung: 18.01.2023
(73) Patentinhaber: Wacker Chemie AG, 81737 München (DE)
(72) Erfinder: BIENERTH, Holger, 81825 München (DE); BRUMMER, Josef, 84359 Simbach (DE); EDER, Klaus-Jürgen, 84335 Mitterskirchen (DE); ZEH, Harald, 84489 Burghausen (DE)
(74) Vertreter: Ege, Markus
(86) Internationale Anmeldenummer: PCT/EP2020/056347
(87) Internationale Veröffentlichungsnummer: WO 2021/180309

(56) Entgegenhaltungen:
- WO-A1-2019/038105
- DE-A1-102014 101 519

## Beschreibung

Die Erfindung betrifft Verfahren zur Herstellung von Schaumbeton, Betonzusammensetzungen zur Herstellung von Schaumbeton sowie Verfahren zum Applizieren des Schaumbetons, insbesondere zur Herstellung von beispielsweise Betonfertigteilen, Böden oder Wänden.

Herkömmliche Betonzusammensetzungen basieren auf hydraulisch abbindenden Bindemitteln, wie Zement, Füllstoffen und gegebenenfalls weiteren Additiven. Durch Zugabe von Wasser werden Betonzusammensetzungen angemacht und in Frischbeton überführt, der dann zur Herstellung von beispielsweise Betonfertigteilen eingesetzt werden kann. Abbinden des Frischbetons ergibt Festbeton. Je nach Einsatzgebiet werden besondere Anforderungen an den Festbeton gestellt. So wird vom Markt vermehrt Festbeton mit verbesserten Dämmeigenschaften nachgefragt, insbesondere zur Schall- oder Wärmedämmung. Denn wenn der Festbeton selber schon über isolierende Eigenschaften verfügt, kann das aufwändige Aufbringen von Dämmmaterial, wie EPS-Dämmplatten oder Mineralwolle, entfallen, wodurch Ressourcen und Arbeitszeit gespart werden. Zudem hat Dämmbeton gegenüber herkömmlichen Dämmmaterialien den Vorteil, nicht brennbar zu sein und zudem gut auf verschiedenen Untergründen zu haften. Für solche Zwecke eignet sich Schaumbeton. Schaumbeton enthält implizit in vermehrtem Umfang Luftporen.

Für Schaumbeton besteht auf Grund seines Luftporengehalts die Herausforderung, die gewünschten mechanischen Eigenschaften, wie Biegezug-, Druck- oder Haftzugfestigkeiten, zu erreichen, das Eindringen von Wasser einzuschränken oder insgesamt die Stabilität oder Dauerhaftigkeit des Schaumbetons zu gewährleisten.

Schaumbeton ist beispielsweise aus der CN108484211 oder der CN 108529940 bekannt. Die DE4209897 und DE3909083 beschreiben Gips-basierten Schaummörtel. Die GB20047636 befasst sich mit Silicatschäumen. Die DE2056255 offenbart Schaummittel für Gips- und Zementmassen. Die DE4009967 beschreibt die Zugabe von Porenbildnern in Mörtel, wobei die Porenbildner mit einer inaktivierenden Beschichtung versehen sind, so dass die porenbildende Wirkung der Porenbildner im Frischbeton zeitverzögert erfolgt. 5

WO 2019/038105 A1 offenbart die Herstellung eines Hybridschaums zur Anwendung als inter alia Estrich auf der Basis einer Kombination von anorganischem und organischen Bindemittel, wobei als organische Bindemittel Polymere von ethylenisch ungesättigten Monomeren in Form von wässrigen Dispersionen oder in Wasser redispergierbaren Pulvern eingesetzt werden.

Mörtel werden allgemein in dünneren Schichten aufgetragen als Beton und dienen oftmals als Oberputz oder zum Verkleben von beispielsweise Ziegeln, Fliesen, Dämmplatten oder sonstigen Gegenständen. Bei Mörteln stehen deswegen oftmals adhäsive Eigenschaften im Vordergrund, wohingegen Beton allgemein zur Konstruktion von Bauwerken, beispielsweise für Wände oder Böden, eingesetzt wird und damit eine statisch tragende Rolle hat, so dass an Festbeton ganz andere mechanische Anforderungen gestellt werden als an Mörtel. Gips ist generell hygroskopisch und nicht wasserbeständig.

Vor diesem Hintergrund bestand die Aufgabe, Schaumbeton mit verbesserten mechanischen Eigenschaften, wie beispielweise Biegezug-, Druck- und Haftzugfestigkeiten, bereitzustellen. Zudem sollte der Schaumbeton nach Möglichkeit rissüberbrückend sein und eine hohe Beständigkeit gegenüber Wasserbeanspruchung aufweisen. Insgesamt sollte der Schaumbeton durch eine hohe Dauerhaftigkeit charakterisiert sein.

Ein Gegenstand der Erfindung sind Verfahren zur Herstellung von Schaumbeton, in denen Luftporen mittels einem oder mehreren Luftporenbildnern und/oder durch Eintragen von Luft in wässrige Betonzusammensetzungen eingebracht werden,
wobei die wässrigen Betonzusammensetzungen auf
einem oder mehreren Schaumstabilisatoren,
einem oder mehreren Schutzkolloid stabilisierten Polymeren von ethylenisch ungesättigten Monomeren in Form von wässrigen Dispersionen oder in Wasser redispergierbaren Pulvern,
30 bis 95 Gew.-% Zement, bezogen auf das Trockengewicht der Komponenten zur Herstellung der Betonzusammensetzungen,
gegebenenfalls einem oder mehreren Füllstoffen und gegebenenfalls einem oder mehreren Additiven basieren, mit der Maßgabe, dass der Zement aus schnellabbindendem Zement und einem oder mehreren Portlandzementen besteht, wobei der schnellabbindende Zement ausgewählt wird aus der Gruppe umfassend Aluminatzement, Calciumsulfoaluminatzemente und Hochtonerdezement, und wobei die Betonzusammensetzungen zu 25 bis 55 Gew.-% auf schnellabbindendem Zement basieren, bezogen auf das Gesamtgewicht des insgesamt eingesetzten Zements.

Ein weiterer Gegenstand der Erfindung sind Betonzusammensetzungen zur Herstellung von Schaumbeton basierend auf
einem oder mehreren Schaumstabilisatoren,
einem oder mehreren Luftporenbildnern,
gegebenenfalls einem oder mehreren Füllstoffen und
gegebenenfalls einem oder mehreren Additiven, dadurch gekennzeichnet, dass ein oder mehrere Schutzkolloid stabilisierte Polymere von ethylenisch ungesättigten Monomeren in Form von wässrigen Dispersionen oder in Wasser redispergieren Pulvern und
30 bis 95 Gew.-% Zement, bezogen auf das Trockengewicht der Betonzusammensetzungen, enthalten sind, mit der Maßgabe, dass der Zement aus schnellabbindendem Zement und einem oder mehreren Portlandzementen besteht, wobei der schnellabbindende Zement ausgewählt wird aus der Gruppe umfassend Aluminatzement, Calciumsulfoaluminatzemente und Hochtonerdezement, und wobei die Betonzusammensetzungen zu 25 bis 55 Gew.-% auf schnellabbindendem Zement basieren, bezogen auf das Gesamtgewicht des insgesamt eingesetzten Zements.

Der Begriff Schaumbeton umfasst allgemein auf Frischbeton und Festbeton.

Das Eintragen von Luft in wässrige Betonzusammensetzungen kann beispielweise durch mechanisches Mischen der wässrigen Betonzusammensetzungen mit Luft erfolgen. Hierzu können die wässrigen Betonzusammensetzungen beispielsweise aufgeschlagen werden. Das mechanische Mischen erfolgt vorzugsweise mittels Rührblättern, Mischwendeln, Paddel-, Propeller- oder Lochblech-Rührern. Besonders bevorzugt sind Mischwendel mit Lochblech. Es können auch Schaumgeneratoren Einsatz finden. Schaumgeneratoren sind kommerziell verfügbare Maschinen zum Generieren von Schaum. Es kann auch Luft in die wässrigen Betonzusammensetzungen eingeblasen werden. Die Luft, die in die wässrigen Betonzusammensetzungen eingetragen wird, hat vorzugsweise einen Druck oberhalb des Umgebungsdrucks, mehr bevorzugt von 1,1 bis 10 bar, besonders bevorzugt 1,5 bis 6 bar und am meisten bevorzugt von 2 bis 3 bar. Die Angaben in bar beziehen sich herbei allgemein auf den absoluten Druck. Die Luft hat vorzugsweise eine Temperatur von 5°C bis 35°C, insbesondere Umgebungstemperatur.

In einer bevorzugten Ausführungsform werden Luftporen mittels einem oder mehreren Luftporenbildnern und zusätzlich durch Lufteintrag in die wässrigen Betonzusammensetzungen eingebracht.

Als Luftporenbildner bevorzugt sind Ammonium- oder Alkalisalze der Hydrogencarbonate oder Carbonate, insbesondere deren Ammonium- oder Natrium- oder Kaliumsalze. Besonders bevorzugt sind Hydrogencarbonate. Am meisten bevorzugt ist Natriumhydrogencarbonat. Vorzugsweise umfassen die Luftporenbildner kein Erdalkalicarbonat. Luftporenbildner haben eine Körnung von vorzugsweise 10 µm bis 1 mm, besonders bevorzugt von 100 µm bis 800 µm und am meisten bevorzugt 200 µm bis 700 µm.

Die Betonzusammensetzungen basieren zu vorzugsweise 0,01 bis 10 Gew.-%, besonders bevorzugt 0,05 bis 5 Gew.-% und am meisten bevorzugt 0,1 bis 3 Gew.-% auf Luftporenbildnern, bezogen auf das Trockengewicht der Komponenten zur Herstellung der Betonzusammensetzungen.

Es können beispielsweise Tensid-, Polymer-, Protein- oder Enzym-basierte Schaumstabilisatoren Einsatz finden.

Beispiele für Tenside als Schaumstabilisatoren sind Olefinsulfonsäuren; Fettsäuren, mit vorzugsweise 16 bis 18 C-Atomen, oder deren Salze; Fettalkohole, mit vorzugsweise 10 bis 18 C-Atomen; Alkylphenole oder Hydroxyalkylphenole mit vorzugsweise Alkylketten mit 10 bis 18 C-Atomen; Alkyl- und Alkylarylethersulfate mit vorzugsweise 8 bis 18 C-Atomen im hydrophoben Rest und vorzugsweise 1 bis 50 Ethylenoxideinheiten; Sulfonate, insbesondere Alkylsulfonate mit vorzugsweise 8 bis 18 C-Atomen, Alkylarylsulfonate, vorzugsweise mit Alkylresten mit 8 bis 18 C-Atomen, Ester oder Halbester der Sulfobernsteinsäure mit vorzugsweise einwertigen Alkoholen oder Alkylphenolen mit vorzugsweise 4 bis 15 C-Atomen im Alkylrest, wobei diese Alkohole oder Alkylphenole auch mit 1 bis 40 Ethylenoxideinheiten ethoxyliert sein können; Phosphorsäureteilester, insbesondere Alkyl- oder Alkylarylphosphate mit 8 bis 20 C-Atomen im organischen Rest, Alkylether- und Alkylaryletherphosphate mit 8 bis 20 C-Atomen im Alkyl bzw. Alkylarylrest und 1 bis 50 EO-Einheiten; Alkylpolyglykolether bevorzugt mit 8 bis 40 EO-Einheiten und Alkylresten mit 8 bis 20 C-Atomen; Alkylarylpolyglykolether bevorzugt mit 8 bis 40 EO-Einheiten und 8 bis 20 C-Atomen in den Alkyl-und Arylresten; Ethylenoxid/Propylenoxid (EO/ PO)-Blockcopolymere bevorzugt mit 8 bis 40 EO- bzw. PO-Einheiten; N-Methyltauride vorzugsweise von höheren Fettsäuren, mit vorzugsweise 10 bis 18 C-Atomen; Fettsäurealkylolamide, wie Mono- oder Diaethanolamide von Fettsäuren; Aminoxide oder Phosphinoxide, wie Cocosdimethylaminoxid oder Cocosdimethylphosphinoxid der allgemeinen Formel R-N(CH₃)₂=0 oder R-P(CH₃)₂=0; Ampholyte, wie Cocosfettsäure-Dimethylamino-Essigsaures Natrium oder Sulfobetain; Phosphorsäureester insbesondere von langkettigen Alkoholen, mit vorzugsweise 10 bis 18 C-Atomen oder von mit 1 bis 4 Mol Ethylenoxid oxyethylierten Alkoholen mit 8 bis 10 C-Atomen im Molekül.

Eine EO-Einheit steht für eine Ethylenoxideinheit und eine PO-Einheit für eine Propylenoxideinheit. Die vorgenannten Säuren können auch in Form ihrer Salze vorliegen, insbesondere Ammonium- oder (Erd)Alkalisalze. Olefinsulfonsäuren enthalten vorzugsweise 10 bis 20 Kohlenstoffatome. Die Olefinsulfonsäuren tragen vorzugsweise ein oder zwei Sulfonsäure- oder Hydroxyalkylsulfonäure-Gruppen. Hierbei sind α-Olefinsulfonsäuren bevorzugt.

Beispiele für Polymere als Schaumstabilisatoren sind Polyvinylalkohole; Polyvinylacetale; Polyvinylpyrrolidone; Polysaccharide in wasserlöslicher Form, wie Stärken (Amylose und Amylopectin), Cellulosen und deren Derivate, wie Carboxymethyl-, Methyl-, Hydroxyethyl-, Hydroxypropyl-Derivate, Dextrine und Cyclodextrine; Ligninsulfonate; Poly(meth)acrylsäure; Copolymerisate von (Meth)acrylaten mit carboxylfunktionellen Comonomereinheiten; Poly(meth)acrylamid; Polyvinylsulfonsäuren und deren wasserlöslichen Copolymere; Melaminformaldehydsulfonate; Naphthalinformaldehydsulfonate; Styrolmaleinsäure-Copolymere und Vinylethermaleinsäure-Copolymere.

Beispiele für Proteine als Schaumstabilisatoren sind Kasein, Kaseinat, Sojaprotein oder Gelatine. Proteine sind beispielsweise erhältlich durch Proteinhydrolyse, insbesondere tierischer Proteine, beispielsweise aus Horn, Blut, Knochen und ähnlichen Abfällen von Rindern, Schweinen und sonstigen Tierkadavern. Enzyme als Schaumstabilisatoren können beispielsweise biotechnologischen Ursprungs sein.

Bevorzugte Schaumstabilisatoren sind Tenside; Polyvinylalkohole; Polyvinylpyrrolidone; Cellulosen und deren Derivate, wie Carboxymethyl-, Methyl-, Hydroxyethyl-, Hydroxypropyl-Derivate; Proteine wie Kasein oder Kaseinat, Sojaprotein und Gelatine. Besonders bevorzugte Schaumstabilisatoren sind Tenside, insbesondere Olefinsulfonsäuren.

Die Schaumstabilisatoren haben Molekulargewichte von vorzugsweise ≤ 4000 g/mol, mehr bevorzugt 5 3000 g/mol, noch mehr bevorzugt ≤ 2500 g/mol, besonders bevorzugt ≤ 1500 g/mol und am meisten bevorzugt ≤ 1000 g/mol.

Die Schaumstabilisatoren und die Schutzkolloid stabilisierten Polymere liegen im Allgemeinen nebeneinander vor. Die Schaumstabilisatoren sind allgemein nicht Bestandteil der Schutzkolloid stabilisierten Polymere.

Die Betonzusammensetzungen basieren zu vorzugsweise 0,01 bis 35 Gew.-%, besonders bevorzugt 0,05 bis 20 Gew.-% und am meisten bevorzugt 0,1 bis 10 Gew.-% auf Schaumstabilisatoren. Tenside oder Polymere als Schaumstabilisatoren sind zu vorzugsweise 0,01 bis 10 Gew.-%, besonders bevorzugt 0,05 bis 5 Gew.-% und am meisten bevorzugt 0,1 bis 3 Gew.-% enthalten. Proteine oder Enzyme als Schaumstabilisatoren sind zu vorzugsweise 10 bis 35 Gew.-%, besonders bevorzugt 15 bis 30 Gew.-% und am meisten bevorzugt 20 bis 25 Gew.-% enthalten. Die Angaben in Gew.-% beziehen sich hierbei auf Trockengewicht der Komponenten zur Herstellung der Betonzusammensetzungen.

Die Betonzusammensetzungen basieren zu vorzugsweise 0,5 bis 20 Gew.-%, besonders bevorzugt 1 bis 15 Gew.-% und am meisten bevorzugt 2 bis 9 Gew.-% auf Schutzkolloid stabilisierten Polymeren von ethylenisch ungesättigten Monomeren, bezogen auf das Trockengewicht der Komponenten zur Herstellung der Betonzusammensetzungen.

Die Polymere von ethylenisch ungesättigten Monomeren basieren beispielsweise auf einem oder mehreren Monomeren ausgewählt aus der Gruppe umfassend Vinylester, (Meth)acrylsäureester, Vinylaromaten, Olefine, 1,3-Diene und Vinylhalogenide.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9R oder VeoVa10R (Handelsnamen der Firma Resolution). Besonders bevorzugt ist Vinylacetat.

Geeignete Monomere aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat.

Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen und Propylen, und die bevorzugten Diene sind 1,3-Butadien und Isopren.

Gegebenenfalls können noch 0 bis 10 Gew.-%, vorzugsweise 0,1 bis 5 Gew.-%, bezogen auf das Gesamtgewicht der Monomere, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden Mischpolymerisate von Vinylacetat mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von Vinylacetat, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit Vinylacetat, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Die Monomerauswahl bzw. die Auswahl der Gewichtsanteile der Comonomere erfolgt dabei so, dass eine Glasübergangstemperatur Tg von -25°C bis +35°C, vorzugsweise -10°C bis +25°C, besonders bevorzugt -10°C bis +20°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate erfolgt allgemein in wässrigem Medium und bevorzugt nach dem Emulsions- oder Suspensionspolymerisationsverfahren - wie beispielsweise in DE-A 102008043988 beschrieben. Bei der Polymerisation können die gängigen Schutzkolloide und/oder Emulgatoren eingesetzt werden, wie in der DE-A 102008043988 beschrieben. Die Polymerisate in Form von wässrigen Dispersionen können wie in der DE-A 102008043988 beschrieben in entsprechende in Wasser redispergierbare Pulver überführt werden. Dabei wird in der Regel eine Trocknungshilfe eingesetzt, vorzugsweise die vorgenannten Polyvinylalkohole.

Die Polymere können beispielsweise in Form von wässrigen Dispersionen, insbesondere Schutzkolloid stabilisierten wässrigen Dispersionen vorliegen. Bevorzugte Schutzkolloide sind Polyvinylalkohole, wie teilverseifte oder vollverseifte Polyvinylalkohole, insbesondere mit einem Hydrolysegrad von 80 bis 100 Mol-%. Besonders bevorzugt sind teilverseifte Polyvinylalkohole mit einem Hydrolysegrad von 80 bis 94 Mol-% und einer Höpplerviskosität, in 4 %-iger wässriger Lösung von insbesondere 1 bis 30 mPas (Methode nach Höppler bei 20°C, DIN 53015). Die genannten Schutzkolloide sind mittels dem Fachmann bekannter Verfahren zugänglich. Die Schutzkolloide sind im Allgemeinen in einer Menge von insgesamt 1 bis 20 Gew.-%, bezogen auf das Gesamtgewicht Polymere, enthalten.

Die Polymere liegen vorzugsweise in Form von Schutzkolloid stabilisierten, in Wasser redispergierbaren Pulvern vor. Dispergieren der Schutzkolloid stabilisierten, in Wasser redispergierbaren Polymerepulver führt zur Schutzkolloid stabilisierten Polymeren in Form von wässrigen Redispersionen. Die Pulver enthalten vorzugsweise 3 bis 30 Gew.-%, besonders bevorzugt 5 bis 20 Gew.-% Polyvinylalkohole, insbesondere die vorgenannten Polyvinylalkohole, bezogen auf das Trockengewicht der Pulver.

Die Schutzkolloid stabilisierten Polymere liegen im Allgemeinen separat von den Luftporenbildnern und/oder Schaumstabilisatoren vor.

Die Luftporenbildner und/oder Schaumstabilisatoren sind im Allgemeinen nicht mit den Schutzkolloid stabilisierten Polymere beschichtet. Die Schutzkolloid stabilisierten Polymere beziehungsweise die Schutzkolloide oder die Polymere der Schutzkolloid stabilisierten Polymere sind allgemein von den Schaumstabilisatoren und etwaigen Verdickungsmitteln verschieden.

Bei Zement handelt es sich erfindungsgemäß um einen Zement, der aus schnellabbindendem Zement und einem oder mehreren Portlandzementen besteht, wobei der schnellabbindende Zement ausgewählt wird aus der Gruppe umfassend Aluminatzement, Calciumsulfoaluminatzemente und Hochtonerdezement, und wobei die Betonzusammensetzungen zu 25 bis 55 Gew.-% auf schnellabbindendem Zement basieren, bezogen auf das Gesamtgewicht des insgesamt eingesetzten Zements. Z

Bevorzugt sind Portlandzement CEM I, Portlandhüttenzement CEM II/A-S, CEM II/B-S, Portlandkalksteinzement CEM II/A-LL, Portlandflugaschezement CEM II/A-V oder Portlandflugaschehüttenzement CEM Z

Auf diesem Zement basieren die Betonzusammensetzungen zu vorzugsweise 40 bis 95 Gew.-%, mehr bevorzugt 50 bis 92 Gew.-%, besonders bevorzugt 60 bis 91 Gew.-% und am meisten bevorzugt 70 bis 90 Gew.-%, bezogen auf das Trockengewicht der Komponenten zur Herstellung der Betonzusammensetzungen.

Die Betonzusammensetzungen basieren zu vorzugsweise 25 bis 55 Gew.-%, besonders bevorzugt 35 bis 45 Gew.-% und am meisten bevorzugt 45 bis 55 Gew.-% auf schnellabbindenden Zement, bezogen auf das Gesamtgewicht des insgesamt eingesetzten Zements.

Die Betonzusammensetzungen können auch ein oder mehrere Verdickungsmittel enthalten, beispielsweise Polysaccharide wie Celluloseether und modifizierte Celluloseether, Celluloseester, Stärkeether, Guar Gum, Xanthan Gum, Polycarbonsäuren wie Polyacrylsäure und deren Teilester, Casein und assoziativ wirkende Verdicker. Bevorzugte Celluloseether sind Methylcelluloseether. Die Verdickungsmittel sind allgemein von den Schaumstabilisatoren verschieden. Die Verdickungsmittel haben Molekulargewichte von vorzugsweise > 4000 g/mol, besonders bevorzugt 2 10000 g/mol und am meisten bevorzugt ≥ 20000 g/mol. Die Betonzusammensetzungen basieren zu vorzugsweise ≤ 5 Gew.-%, besonders bevorzugt 0,1 bis 3 Gew.-% und am meisten bevorzugt 0,5 bis 1,5 Gew.-% auf Verdickungsmittel, bezogen auf das Trockengewicht der Komponenten zur Herstellung der Betonzusammensetzungen.

Die Betonzusammensetzungen können auch ein oder mehrere Puzzolane enthalten, wie beispielsweise Kaolin, Mikrosilica, Diatomeenerde, Flugasche, Trassmehl, gemahlene Hochofenschlacke, Glasmehl, gefällte Kieselsäure und pyrogene Kieselsäure. Bevorzugte Puzzolane sind Kaolin, Mikrosilica, Flugasche, gemahlene Hochofenschlacke, insbesondere Metakaolin.

Die Betonzusammensetzungen basieren zu beispielsweise 0,1 bis 10 Gew.-%, vorzugsweise 0,5 bis 5 Gew.-% und besonders bevorzugt 1 bis 3 Gew.-% auf Puzzolanen, bezogen auf das Trockengewicht der Komponenten zur Herstellung der Betonzusammensetzungen.

Vorzugsweise basieren die Betonzusammensetzungen zu ≤ 30 Gew.-%, mehr bevorzugt ≤ 20 Gew.-%, mehr bevorzugt ≤ 10 Gew.-% und besonders bevorzugt ≤ 5 Gew.-% auf Gips, bezogen auf das Trockengewicht der Komponenten zur Herstellung der Betonzusammensetzungen. Am meisten bevorzugt enthalten die Betonzusammensetzungen keinen Gips. Beispielhafte Ausführungsformen von Gips sind α- oder β-Halbhydrat (CaSO₄·1/2 H₂O), Dihydrat, Anhydrit oder das bei der Rauchgasentschwefelung anfallende Calciumsulfat (REA-Gips). Gips hat allgemein einen nachteiligen Einfluss auf die Wasserbeständigkeit des Schaumbetons. Zudem muss Gips-haltiger Schaumbeton als Sondermüll entsorgt werden.

Beispiele für Füllstoffe für die Betonzusammensetzungen sind auch Quarzsand, Quarzmehl, Sand, Kalksteinmehl, Dolomit, Ton, Kreide, Hüttensandmehl, Weißkalkhydrat, Talkum oder Glimmer, Gummigranulat oder Hartfüllstoffe, wie Aluminiumsilicate, Korund, Basalt, Carbide, wie Siliciumcarbid oder Titancarbid. Bevorzugt werden als Füllstoffe Quarzsand, Quarzmehl, Kalksteinmehl, Calciumcarbonat, Calciummagnesiumcarbonat (Dolomit), Kreide oder Weißkalkhydrat. Vorzugsweise enthalten die Betonzusammensetzungen kein Kies und/oder keinen Splitt. Füllstoffe haben eine Körnung von vorzugsweise ≤ 2 mm, besonders bevorzugt ≤ 1 mm.

Die Betonzusammensetzungen basieren zu vorzugsweise 0,1 bis 10 Gew.-%, besonders bevorzugt 0,5 bis 5 Gew.-% auf Füllstoffen, bezogen auf das Trockengewicht der Komponenten zur Herstellung der Betonzusammensetzungen. Alternativ können die Betonzusammensetzungen auch frei von Füllstoffen sein.

Die Betonzusammensetzungen können auch Leichtfüllstoffe enthalten. Als Leichtfüllstoffe bezeichnet man allgemein Füllstoffe mit niederem Schüttgewicht, meist von kleiner als 500 g/l. Die Leichtfüllstoffe sind vorzugsweise von den vorgenannten Füllstoffen verschieden. Typische Leichtfüllstoffe sind, auf synthetischer oder natürlicher Basis, Stoffe wie Mikrohohlkugeln aus Glas, Polymere wie Polystyrolkugeln, Alumosilikate, Siliciumoxid, Aluminium-Siliciumoxid, Calcium-Silikathydrat, Siliciumdioxid, Aluminium-Silikat, Magnesium-Silikat, Aluminium-Slikathydrat, Calcium-Aluminium-Silikat, Calcium-Silikathydrat, Aluminium-Eisen-Magnesium-Silikat, Calciummetasilikat und/oder vulkanischer Schlacke. Bevorzugte Leichtfüllstoffe sind Perlite, Celite, Cabosil, Circosil, Eurocell, Fillite, Promaxon, Vermex und/oder Wollastonite sowie Polystyrol.

Die Betonzusammensetzungen basieren zu vorzugsweise 0,1 bis 10 Gew.-%, besonders bevorzugt 0,5 bis 5 Gew.-% und am meisten bevorzugt 1 bis 3 Gew.-% auf Leichtfüllstoffen, bezogen auf das Trockengewicht der Komponenten zur Herstellung der Betonzusammensetzungen.

Zudem können die Betonzusammensetzungen auch Abbindebeschleuniger enthaltend, wie Aluminiumverbindungen, Silikate, (Erd)Alkalihydroxide, Nitrate, Nitrite, Sulfate, Borate oder von Carbonsäuren. Bevorzugte Abbindebeschleuniger sind Aluminiumsalze, Aluminate, Alkalisilikate, wie Wasserglas, Alkaliformiate, Kaliumhydroxid oder Calciumhydroxid (Ca(OH)₂).

Die Betonzusammensetzungen basieren zu vorzugsweise 0,1 bis 5 Gew.-%, besonders bevorzugt 0,2 bis 2 Gew.-% und am meisten bevorzugt 0,3 bis 1 Gew.-% auf Abbindebeschleunigern, bezogen auf das Trockengewicht der Komponenten zur Herstellung der Betonzusammensetzungen.

Zusätzlich können die Betonzusammensetzungen Fasern enthalten, wie natürliche, modifizierte natürliche oder synthetische Fasermaterialien, auf Basis von organischen und/oder anorganischen Materialien. Beispiele für natürliche, organische Fasern sind Baumwolle, Hanf, Jute, Flachs, Holzfasern, Cellulose, Viskose, Lederfasern oder Sisal. Beispiele für synthetische, organische Fasern sind Viskosefasern, Polyamidfasern, Polyesterfasern, Polyacrylnitrilfasern, Dralonfasern, Polyethylenfasern, Polypropylenfasern, Polyvinylalkoholfasern oder Aramidfasern. Die anorganischen Fasern können beispielsweise Glasfasern, Kohlenstofffasern, Mineralwollfasern oder Metallfasern sein. Bevorzugt werden Baumwollfasern, Polyacrylnitrilfasern und Cellulosefasern. Die Fasern haben vorzugsweise eine Länge von 1 bis 10 mm, 2 bis 6 mm und am meisten bevorzugt 3 mm bis 4 mm. Die Fasern können in Form von losen Fasern, bündelweise verklebten Fasern, fibrillierten Fasern, mulitfilamenten Fasern oder Fasern in Dosierverpackung eingesetzt werden. Die Betonzusammensetzungen basieren zu vorzugsweise 0,01 bis 5 Gew.-%, besonders bevorzugt 0,1 bis 3 Gew.-% und am meisten bevorzugt 0,5 bis 2 Gew.-% auf Fasern, bezogen auf das Trockengewicht der Komponenten zur Herstellung der Betonzusammensetzungen. Mit Fasern kann die mechanische Stabilität des Schaumbetons gesteigert und die Rissbildungsneigung des Schaumbetons reduziert werden.

Gegebenenfalls können die Betonzusammensetzungen noch Additive enthalten, beispielsweise Verflüssiger, Fließmittel, Verzögerer, Filmbildehilfsmittel, Dispergiermittel, Hydrophobierungsmittel, Pigmente, Weichmacher, Konservierungsmittel, Flammschutzmittel (z.B. Aluminiumhydroxid), disperse Kieselsäure. Bevorzugte Additive sind Fließmittel und Verflüssiger. Additive sind zu vorzugsweise 0 bis 20 Gew.-%, besonders bevorzugt 0,1 bis 10 Gew.-% und am meisten bevorzugt 0,5 bis 7 Gew.-% enthalten, bezogen auf das Trockengewicht der Komponenten zur Herstellung der Betonzusammensetzungen.

Vorzugsweise enthalten die Betonzusammensetzungen keine Hexafluorkieselsäure, insbesondere keine Salze der Hexafluorkieselsäure, wie Calcium-, Magnesium-, Zink- oder Ammonium-Salze.

Zur Herstellung der wässrigen Betonzusammensetzungen werden vorzugsweise 30 bis 90 Gew.-%, besonders bevorzugt 40 bis 80 Gew.-% und am meisten bevorzugt 50 bis 75 Gew.-% Wasser, bezogen auf die Gesamtmenge des Zements, eingesetzt.

Zur Herstellung der wässrigen Betonzusammensetzungen können, soweit nicht anders angegeben, deren einzelnen Bestandteile in gängigen Mischvorrichtungen gemischt werden, beispielsweise in Betonmischern oder Fertigbetonmischwerken. Es können auch Dissolver Einsatz finden. Durch das Mischen werden die einzelnen Bestandteile der Betonzusammensetzungen allgemein homogenisiert.

Bevorzugt erfolgt die Herstellung der Betonzusammensetzungen, indem eine Mischung a) enthaltend
ein oder mehrere Schaumstabilisatoren,
ein oder mehrere Schutzkolloid stabilisierte Polymere von ethylenisch ungesättigten Monomeren in Form von wässrigen Dispersionen oder in Wasser redispergieren Pulvern,
gegebenenfalls ein oder mehrere Luftporenbildner,
gegebenenfalls ein oder mehrere Additive und
Wasser
mit 30 bis 95 Gew.-%, insbesondere 60 bis 90 Gew.-%, Zement, bezogen auf das Trockengewicht der Komponenten zur Herstellung der Betonzusammensetzungen, gegebenenfalls einem oder mehreren Füllstoffen und gegebenenfalls einem oder mehreren Additiven gemischt wird.

Mit der erfindungsgemäßen Vorgehensweise ist besonders vorteilhafter Schaumbeton erhältlich. Beliebiges Mischen der einzelnen Schaumbetonbestandteile führt bekanntermaßen nicht zu Schaumbeton.

Vorzugsweise wird die Mischung a) mit einer Mischung b) enthaltend 30 bis 95 Gew.-%, insbesondere 60 bis 90 Gew.-%, Zement, bezogen auf das Trockengewicht der Komponenten zur Herstellung der Betonzusammensetzungen, gegebenenfalls Füllstoffe sowie gegebenenfalls Additive gemischt.

In einem besonders bevorzugten Verfahren erfolgt die Herstellung der Betonzusammensetzungen, indem durch Mischen von einem oder mehreren Schutzkolloid stabilisierten Polymeren von ethylenisch ungesättigten Monomeren in Form von wässrigen Dispersionen oder in Wasser redispergieren Pulvern, gegebenenfalls Fasern und gegebenenfalls Additiven, insbesondere Verdickungsmitteln, sowie Wasser eine Mischung a1) hergestellt wird und anschließend zur Mischung a1) ein oder mehrere Schaumstabilisatoren, gegebenenfalls ein oder mehrere Luftporenbildner und gegebenenfalls Additive beigemischt werden, wodurch Mischung a2) erhalten wird, und die Mischung a2) gemischt wird mit einer Mischung b) enthaltend 30 bis 95 Gew.-%, insbesondere 60 bis 90 Gew.-%, Zement, bezogen auf das Trockengewicht der Komponenten zur Herstellung der Betonzusammensetzungen, gegebenenfalls Füllstoffe, gegebenenfalls Fasern und gegebenenfalls Additive.

Wasser wird vorzugsweise in die Mischung a), insbesondere in die Mischung a1) eingebracht. Bei Mischung b) kann es sich um eine wässrige Mischung, insbesondere um eine Trockenmischungen handeln. Bei Einsatz der Mischung b) als Trockenmischung erfolgt das Abbinden der Betonzusammensetzungen besonders rasch, beispielsweise um mehr als einen Faktor zehn oder zwanzig schneller als bei Einsatz von wässrigen Mischungen b) .

Das Herstellen der Mischungen a) oder a1) erfolgt vorzugsweise durch 2 bis 15 minütiges, besonders bevorzugt 5 bis 10 minütiges Mischen. Das Herstellen der Mischung a2) erfolgt ausgehend von Mischung a1) durch Mischen für vorzugsweise 10 bis 60 Sekunden, insbesondere 20 bis 40 Sekunden. Falls Luftporen durch Lufteintrag eingebracht werden, wird die Mischung a) oder a2) für vorzugsweise 2 Sekunden bis 4 Minuten aufgeschäumt. Das Aufschäumen von Mischung a) oder a2) kann kontinuierlich oder diskontinuierlich erfolgen. Kontinuierliches Aufschäumen kann beispielsweise in herkömmlichen Schaumgeneratoren erfolgen. Diskontinuierliches Aufschäumen von Mischung a) oder a2) erfolgt für vorzugsweise 1 bis 4 Minuten, insbesondere 2 bis 3 Minuten. Kontinuierliches Aufschäumen von Mischung a) oder a2) erfolgt für vorzugsweise ≤ 60 Sekunden, insbesondere 2 bis 30 Sekunden. Nach Zusammengeben der Mischungen a) und b) beziehungsweise der Mischungen a2) und b) wird vorzugsweise für 2 bis 60 Sekunden gemischt. Diskontinuierliches Mischen der Mischungen a) und b) beziehungsweise der Mischungen a2) und b) dauert vorzugsweise 1 bis 4 Minuten, insbesondere 30 bis 60 Sekunden. Kontinuierliches Mischen der Mischungen a) und b) beziehungsweise der Mischungen a2) und b) dauert vorzugsweise 2 bis 30 Sekunden. Die angegebenen Zeiten beziehen sich generell auf das bloße Mischen. Etwaige Zeiten für die Förderung der anwendungsbereiten Betonzusammensetzungen sind nicht enthalten.

Das Eintragen von Luft zur Erzeugung von Luftporen erfolgt vorzugsweise mit Mischung a) und besonders bevorzugt mit der Mischung a2).

Das Mischen erfolgt vorzugsweise bei 5 bis 35°C, besonders bevorzugt 15 bis 25°C. Die Mischungen a), a1) oder a2) haben einen pH-Wert von vorzugsweise 3 bis 8 und besonders bevorzugt 4 bis 7.

Die Mischungen a) beziehungsweise a2) liegen vorzugsweise in Form eines Schaums vor. Der Schaum enthält allgemein Luftporen. Der Schaum hat vorzugsweise eine Sahne-ähnliche Konsistenz. Der Schaum hat eine Dichte von vorzugsweise 0,05 bis 1 g/cm³, besonders bevorzugt 0,1 bis 0,7 g/cm³ und am meisten bevorzugt 0,1 bis 0,5 g/cm³. Die Bestimmung der Dichte kann auf herkömmliche Weise erfolgen, beispielsweise durch Befüllen eines Behälters mit einem definierten Volumen des Schaums sowie Auswiegen.

Im Allgemeinen werden die Luftporen enthaltenden, wässrigen Betonzusammensetzungen unmittelbar nach ihrer Herstellung appliziert, insbesondere ohne einen weiteren Verarbeitungsschritt.

Die Applikation der Luftporen enthaltenden, wässrigen Betonzusammensetzungen kann beispielsweise durch Aufbringen auf einen Untergrund oder durch Einbringen in ein Formteil erfolgen.

Die Luftporen enthaltenden, wässrigen Betonzusammensetzungen können manuell, mittels 3d-Druck oder maschinell, beispielsweise durch Pumpen, durch Einfüllen in Formteile oder Schalungen oder auf sonstige herkömmliche Weise appliziert werden. Beispiele für Untergründe sind Wände und Böden. Beispiele für Formteile sind Schalungen oder sonstige Formen.

Der Schaumbeton (Festbeton) hat nach 28 Tagen im Normklima (23°C, 50% relative Luftfeuchtigkeit) eine Trockenrohdichte von vorzugsweise 10 bis 1000 kg/m³, besonders bevorzugt 100 bis 800 kg/m³ (Bestimmungsmethode: angelehnt an EN 1015-6) .

Der Schaumbeton (Festbeton) hat nach 28 Tagen im Normklima (23°C, 50% relative Luftfeuchtigkeit) eine Wärmeleitfähigkeit von vorzugsweise 20 bis 200 mW/mK, besonders bevorzugt 30 bis 150 mW/mK und am meisten bevorzugt 30 bis 50 mW/mK. Die Bestimmung der Wärmeleitfähigkeit erfolgt mit dem Wärmeleitfähigkeitsmessgerät HFM 436 der Firma Netzsch nach DIN EN 13163. Die Messung wird mit der Einstellung "Lamda 10°C" durchgeführt, die untere Platte wird auf 2,5°C und die obere Platte auf 17,5°C eingestellt. Das Testsubstrat wird mittig eingeklemmt und die Messung läuft bis das Testsubstrat eine Kerntemperatur von 10°C erreicht hat.

Die erfindungsgemäßen Betonzusammensetzungen eignen sich beispielsweise zur Herstellung gängiger Betonfertigteile, wie Dämmplatten, Betonblöcke, Betonmauersteine, Leichtbetonsteine, Tübbinge, Fertigteildämmung oder sonstige Betonformteile. Auch Böden, insbesondere Estriche, Leichtestriche, Dachböden, Flachdächer oder Terrassen, Bodenplatten oder Wände, wie Kellerwände, können hergestellt werden. Alternativ können auf Wände, Böden, Estriche oder sonstige Untergründe auch ein oder mehrere Schichten mit erfindungsgemäßen Betonzusammensetzungen aufgebracht werden. Mit Betonschalungsbau können auch Bauwerke errichtet werden. Auch als Füllmaterial, beispielsweise für Ausgleichschüttungen, zum Hinterfüllen von Türen oder Fenstern oder allgemein zum Verfüllen von Hohlräumen ist der Schaumbeton geeignet. Die Betonzusammensetzungen können auch zum Verfüllen von Ziegeln eingesetzt werden. Besonders vorteilhaft ist das Aufbringen der Betonzusammensetzungen auf Außenwände, insbesondere zu Isolationszwecken.

Im Falle von statisch tragenden Betonprodukten, wie Betonmauersteine, Estrich oder Außenwände, hat der Schaumbeton Dichten von vorzugsweise 0,35 bis 0,50 g/cm³. Bei statisch nicht-tragenden Betonprodukten, wie Dämmplatten, Fertigteildämmung, Ziegelfüllungen oder Dämmputz, kann der Schaumbeton auch Dichten von vorzugsweise 0,25 bis 0,35 g/cm³ haben.

Die Schichtdicke oder der Durchmesser der Betonprodukte ist vorzugsweise ≥ 1 cm, mehr bevorzugt Z 5 cm und besonders bevorzugt ≥ 10 cm. Die Schichtdicke oder der Durchmesser der Betonprodukte ist vorzugsweise ≤ 50 cm, mehr bevorzugt ≤ 30 cm und besonders bevorzugt ≤ 20 cm.

Der erfindungsgemäße Schaumbeton zeichnet sich durch sehr gute Wärme- und Schalldämmung aus. Damit eignet er sich besonders als Isolationsmaterial. Hierbei ist auch von Vorteil, dass der Schaumbeton nicht brennbar ist, im Gegensatz zu EPS-Dämmplatten, und zudem sehr gut auf Untergründen haftet im Unterscheid zu beispielsweise Dämmmaterial auf Basis von Mineralwolle oder Perlite.

Vorteilhafterweise verfügt der erfindungsgemäße Schaumbeton über sehr gute mechanische Eigenschaften, wie Biegezug-, Druck- und Haftzugfestigkeiten, und ist zudem rissüberbrückend. Zudem kann mit der erfindungsgemäßen Vorgehensweise die Wasserbeständigkeit des Schaumbetons verbessert werden, was sich beispielsweise in vermindertem Eindringen von Wasser in Beton oder in reduzierter Wasseraufnahme des Schaumbetons zeigt. Dadurch verfügt der Schaumbeton auch bei Wasserbeanspruchung über eine sehr gute Dauerhaftigkeit. All diese Eigenschaften können auch bei niedrigen Trockendichten des Schaumbetons erreicht werden. Die Trockendichte kann beispielsweise über die Bestandteile der Betonzusammensetzungen, deren Einsatzmengen oder den Luftporengehalt auf einfache Weise eingestellt werden.

Die folgenden Beispiele dienen der detaillierten Erläuterung der Erfindung und sind in keiner Weise als Einschränkung zu verstehen.

### Herstellung der Betonzusammensetzungen und der Schaumbeton-Probekörper:

Zuerst wurden unter Rühren bei Raumtemperatur die Bestandteile der Komponente A (siehe Tabelle 1) während 5 Minuten mit einem Dissolver gemischt und anschließend die Bestandteile der Komponente B (siehe Tabelle 1) während 30 Sekunden beigemischt.

Die so erhaltene Mischung wurde mit einer Bohrmaschine mit Rührer blatt während 2 Minuten bei Raumtemperatur aufgeschäumt. Dabei bildete sich ein Schaum mit Sahne-artiger Konsistenz.

In den erhaltenen Schaum wurde unter Rühren mit der Bohrmaschine mit Rührerblatt die Komponente C in Form einer Trockenmischung bei Raumtemperatur zugegeben und für 30 Sekunden homogenisiert.

Anschließend wurde die Betonzusammensetzung des jeweiligen (Vergleichs)Beispiels 1 bis 3 sofort zum Schaumbeton-Probekörper verarbeitet, wie weiter unten für die jeweilige Austestungsmethode beschrieben.

**Tabelle 1: Formulierung der Betonzusammensetzungen der (Vergleichs)-Beispiele 1 bis 3:**

| | Vergleichsbeispiel 1 [Gew. -T] | Beispiel 2 [Gew. -T] | Beispiel 3 [Gew. -T] |
|---|---|---|---|
| Komponente A: | | | |
| Wasser | 280 | 250 | 260 |
| Polymerdispersion | - | 30 | - |
| Polymerpulver | - | - | 20 |
| Tylose MH 60010 P4 | 3,5 | 3,5 | 3,5 |
| Faser PAC hm 6,7/4 | 1 | 1 | 1 |
| | | | |

| Komponente B: | | | |
|---|---|---|---|
| Hostapur OSB | 2 | 2 | 2 |
| Natriumhydrogencarbonat | 2 | 2 | 2 |
| | | | |

| Komponente C: | | | |
|---|---|---|---|
| Milke CEM I 52,5R | 180 | 180 | 180 |
| Fondu Lafarge | 180 | 180 | 180 |
| Walhalla Edelhydrat | 25 | 25 | 25 |
| Natriumcarbonat | 3 | 3 | 3 |

Zu den Komponenten der Betonzusammensetzungen:
- Polymerdispersion:
   Polyvinylalkohol-stabilisierte wässrige Dispersion eines Vinylacetat-Ethylen-Copolymers (Feststoffgehalt: 60%);
- Polymerpulver:
   Polyvinylalkohol-stabilisiertes, in Wasser redispergierbares Polymerpulver eines Vinylacetat-Ethylen-Copolymers mit einer Glasübergangstemperatur von 16°C;
- Tylose MH 60010 P4 (Handelsname der Shin Etsu):
   veretherte Methylhydroxyethylcellulose (Verdickungsmittel);
- Faser PAC hm 6,7/4 (Handelsname der Schwarzwälder Textilwerke): Polyacrylnitril-Faser mit einer Länge von 4 cm;
- Hostapur OSB (Handelsname der Shin Etsu): Natriumsalz einer C14/C16-α-Olefinsulfonsäure;
- Milke CEM I 52,5R: Portlandzement;
- Fondu Lafarge (Handelsname der Imerys): Calciumoaluminatzement (schnellabbindender Zement);
- Walhalla Edelhydrat: Calciumhydroxid (Ca(OH)₂) (latent hydraulisches Bindemittel).

**Tabelle 2: Austestungsergebnisse der Schaumbeton-Probekörper der (Vergleichs)Beispiele ((V)Bsp.) 1 bis 3:**

| | VBsp. 1 | Bsp. 2 | Bsp. 3 |
|---|---|---|---|
| Trockendichte [kg/m³] | 380 | 360 | 400 |
| Biegezugfestigkeit [N/mm²] | 0,24 | 0,36 | 0,53 |
| Druckfestigkeit [N/mm²] | 0,46 | 0,73 | 1,10 |
| Haftzugfestigkeit [N/mm²] | 0,06 | 0,08 | 0,12 |
| Wasseraufnahme [kg m⁻² min^{-0,5}] | 0,16 | 0,04 | 0,04 |
| Wassereindringung [mm] | 18 | 3 | 3 |

### Austestung der Schaumbeton-Probekörper:

Die Austestung erfolgte nach Lagerung der Schaumbeton-Probekörper für 28 Tage im Normklima (23°C, 50% relative Luftfeuchtigkeit).

Folgende Eigenschaften der Schaumbeton-Probekörper wurden nach folgenden Methoden bestimmt:
- Trockendichte: angelehnt an EN 1015-6;
- Biegezugfestigkeit: angelehnt an DIN18555-3;
- Druckfestigkeit: angelehnt an EN 1015-11;
- Haftzugfestigkeit auf Beton: angelehnt an ETAG004;
- Wasseraufnahme: angelehnt an EN 1015-18;
- Wassereindringung: angelehnt an EN 1015-18.

Die Ergebnisse der Austestung sind in Tabelle 2 zusammengefasst.

## Patentansprüche

1. Verfahren zur Herstellung von Schaumbeton, in denen Luftporen mittels einem oder mehreren Luftporenbildnern und/oder durch Eintragen von Luft in wässrige Betonzusammensetzungen eingebracht werden,
wobei die wässrigen Betonzusammensetzungen auf einem oder mehreren Schaumstabilisatoren,
einem oder mehreren Schutzkolloid stabilisierten Polymeren von ethylenisch ungesättigten Monomeren in Form von wässrigen Dispersionen oder in Wasser redispergierbaren Pulvern,
30 bis 95 Gew.-% Zement, bezogen auf das Trockengewicht der Komponenten zur Herstellung der Betonzusammensetzungen,
gegebenenfalls einem oder mehreren Füllstoffen und gegebenenfalls einem oder mehreren Additiven basieren,
mit der Maßgabe, dass der Zement aus schnellabbindendem Zement und einem oder mehreren Portlandzementen besteht, wobei der schnellabbindende Zement ausgewählt wird aus der Gruppe umfassend Aluminatzement, Calciumsulfoaluminatzemente und Hochtonerdezement, und
wobei die Betonzusammensetzungen zu 25 bis 55 Gew.-% auf schnellabbindendem Zement basieren, bezogen auf das Gesamtgewicht des insgesamt eingesetzten Zements.

2. Betonzusammensetzungen zur Herstellung von Schaumbeton basierend auf einem oder mehreren Schaumstabilisatoren, einem oder mehreren Luftporenbildnern,
gegebenenfalls einem oder mehreren Füllstoffen und gegebenenfalls einem oder mehreren Additiven, **dadurch gekennzeichnet, dass** ein oder mehrere Schutzkolloid stabilisierte Polymere von ethylenisch ungesättigten Monomeren in Form von wässrigen Dispersionen oder in Wasser redispergieren Pulvern und
30 bis 95 Gew.-% Zement, bezogen auf das Trockengewicht der Betonzusammensetzungen, enthalten sind,
mit der Maßgabe, dass der Zement aus schnellabbindendem Zement und einem oder mehreren Portlandzementen besteht, wobei der schnellabbindende Zement ausgewählt wird aus der Gruppe umfassend Aluminatzement, Calciumsulfoaluminatzemente und Hochtonerdezement, und
wobei die Betonzusammensetzungen zu 25 bis 55 Gew.-% auf schnellabbindendem Zement basieren, bezogen auf das Gesamtgewicht des insgesamt eingesetzten Zements.

3. Betonzusammensetzungen zur Herstellung von Schaumbeton gemäß Anspruch 2, **dadurch gekennzeichnet, dass** es sich bei einem oder mehreren Luftporenbildnern um Ammonium- oder Alkalisalze der Hydrogencarbonate oder Carbonate handelt.

4. Betonzusammensetzungen zur Herstellung von Schaumbeton gemäß Anspruch 2 oder 3, **dadurch gekennzeichnet, dass** als Schaumstabilisatoren
ein oder mehrere Tenside ausgewählt werden aus der Gruppe umfassend Olefinsulfonsäuren; Fettsäuren oder deren Salze; Fettalkohole; Alkylphenole oder Hydroxyalkylphenole; Alkyl- und Alkylarylethersulfate; Alkylsulfonate, Alkylarylsulfonate; Ester oder Halbester der Sulfobernsteinsäure; Phosphorsäureteilester; Alkylpolyglykolether; Alkylarylpolyglykolether; Ethylenoxid/Propylenoxid (EO/PO)-Blockcopolymere; N-Methyltauride; Fettsäurealkylolamide; Aminoxide; oder Phosphinoxide; Cocosfettsäure-Dimethylamino-Essigsaures Natrium; Sulfobetain und Phosphorsäureester; oder
ein oder mehrere Polymere ausgewählt werden aus der Gruppe umfassend Polyvinylalkohole; Polyvinylacetale; Polyvinylpyrrolidone; Polysaccharide in wasserlöslicher Form; Ligninsulfonate; Poly(meth)acrylsäure; Copolymerisate von (Meth)acrylaten mit carboxylfunktionellen Comonomereinheiten; Poly(meth)acrylamid; Polyvinylsulfonsäuren und deren wasserlöslichen Copolymere; Melaminformaldehydsulfonate; Naphthalinformaldehydsulfonate; Styrolmaleinsäure-Copolymere; und Vinylethermaleinsäure-Copolymere; oder
ein oder mehrere Proteine ausgewählt werden aus der Gruppe umfassend Kasein, Kaseinat, Sojaprotein; Gelatine; und sonstige Proteine erhältlich durch Proteinhydrolyse tierischer Proteine;
oder
Enzyme biotechnologischen Ursprungs enthalten sind.

5. Betonzusammensetzungen zur Herstellung von Schaumbeton gemäß Anspruch 2 bis 4, **dadurch gekennzeichnet, dass** die Betonzusammensetzungen zu 0,5 bis 20 Gew.-% auf Schutzkolloid stabilisierten Polymeren von ethylenisch ungesättigten Monomeren basieren, bezogen auf das Trockengewicht der Betonzusammensetzungen.

6. Betonzusammensetzungen zur Herstellung von Schaumbeton gemäß Anspruch 2 bis 5, **dadurch gekennzeichnet, dass** die Polymere von ethylenisch ungesättigten Monomeren basieren auf einem oder mehreren Monomeren ausgewählt aus der Gruppe umfassend Vinylester, (Meth)acrylsäureester, Vinylaromaten, Olefine, 1,3-Diene und Vinylhalogenide.

7. Betonzusammensetzungen zur Herstellung von Schaumbeton gemäß Anspruch 2 bis 6, **dadurch gekennzeichnet, dass** 35 bis 45 Gew.-% schnellabbindender Zement enthalten ist, bezogen auf das Gesamtgewicht des insgesamt enthaltenen Zements,
wobei schnellabbindender Zement ausgewählt wird aus der Gruppe umfassend Aluminatzement, Calciumsulfoaluminatzementen und Hochtonerdezemenent.

8. Betonzusammensetzungen zur Herstellung von Schaumbeton gemäß Anspruch 2 bis 7, **dadurch gekennzeichnet, dass** die Betonzusammensetzungen frei von Füllstoffen sind.

9. Verfahren zur Herstellung von Schaumbeton gemäß Anspruch 1,
**dadurch gekennzeichnet, dass** eine Betonzusammensetzung gemäß Anspruch 2 bis 8 eingesetzt wird.

10. Verfahren zur Herstellung von Schaumbeton gemäß Anspruch 1 oder 9, **dadurch gekennzeichnet, dass** das Einträgen von Luft durch Einblasen von Luft in die wässrigen Betonzusammensetzungen und/oder durch mechanisches Mischen der wässrigen Betonzusammensetzungen mit Luft erfolgt.

11. Verfahren zur Herstellung von Schaumbeton gemäß Anspruch 1, 9 oder 10, **dadurch gekennzeichnet, dass** die Herstellung der wässrigen Betonzusammensetzungen erfolgt, indem eine Mischung enthaltend ein oder mehrere Schaumstabilisatoren,
ein oder mehrere Schutzkolloid stabilisierte Polymere von ethylenisch ungesättigten Monomeren in Form von wässrigen Dispersionen oder in Wasser redispergieren Pulvern,
gegebenenfalls ein oder mehrere Luftporenbildner, gegebenenfalls ein oder mehrere Additive und
Wasser
mit 30 bis 95 Gew.-% Zement, bezogen auf das Trockengewicht der Komponenten zur Herstellung der Betonzusammensetzungen, gegebenenfalls einem oder mehreren Füllstoffen und gegebenenfalls einem oder mehreren Additiven gemischt wird.

12. Verfahren zur Herstellung von Schaumbeton gemäß Anspruch 1, 9 oder 10, **dadurch gekennzeichnet, dass** die Herstellung der wässrigen Betonzusammensetzungen erfolgt, indem durch Mischen von einem oder mehreren Schutzkolloid stabilisierten Polymeren von ethylenisch ungesättigten Monomeren in Form von wässrigen Dispersionen oder in Wasser redispergieren Pulvern, gegebenenfalls Fasern und gegebenenfalls Additiven sowie Wasser eine Mischung a1) hergestellt wird und
anschließend zur Mischung a1) ein oder mehrere Schaumstabilisatoren, gegebenenfalls ein oder mehrere Luftporenbildner und gegebenenfalls Additive beigemischt werden, wodurch Mischung a2) erhalten wird, und
die Mischung a2) gemischt wird mit einer Mischung b) enthaltend 30 bis 95 Gew.-% Zement, bezogen auf das Trockengewicht der Komponenten zur Herstellung der Betonzusammensetzungen, gegebenenfalls Füllstoffe, gegebenenfalls Fasern und gegebenenfalls Additive .

13. Verfahren zur Herstellung von Schaumbeton gemäß Anspruch 12, **dadurch gekennzeichnet, dass** die Mischung b) eine Trockenmischung ist.

14. Verfahren zur Herstellung von Schaumbeton gemäß Anspruch 12 oder 13, **dadurch gekennzeichnet, dass** zur Erzeugung von Luftporen Luft in Mischung a2) eingetragen wird.

15. Verfahren zum Applizieren des Schaumbetons aus Anspruch 1 oder 9 bis 14 durch Aufbringen auf einen Untergrund oder durch Einbringen in ein Formteil.

16. Verfahren zum Applizieren des Schaumbetons gemäß Anspruch 15 zur Herstellung von Betonfertigteilen, Böden, Flachdächern, Terrassen, Bodenplatten, Wänden; oder
zur Beschichtung von Wänden, Böden oder Estrichen; oder
im Betonschalungsbau; als Füllmaterial; oder zum Verfüllen von Ziegeln.

## Claims

1. Process for producing foamed concrete, in which air pores are introduced into aqueous concrete compositions by means of one or more air pore formers and/or by introducing air,
wherein the aqueous concrete compositions are based on one or more foam stabilizers, one or more protective colloid-stabilized polymers of ethylenically unsaturated monomers in the form of aqueous dispersions or water-redispersible powders, 30% to 95% by weight of cement, based on the dry weight of the components for production of the concrete compositions, optionally one or more fillers and optionally one or more additives,
with the proviso that the cement consists of quick-setting cement and one or more portland cements,
wherein the quick-setting cement is selected from the group comprising aluminate cement, calcium sulfoaluminate cements and alumina cement, and
wherein the concrete compositions are based to an extent of 25% to 55% by weight on quick-setting cement, based on the total weight of the cement used overall.

2. Concrete compositions for production of foamed concrete, based on one or more foam stabilizers, one or more air pore formers, optionally one or more fillers and optionally one or more additives, **characterized in that** one or more protective colloid-stabilized polymers of ethylenically unsaturated monomers are present in the form of aqueous dispersions or water-redispersible powders and 30% to 95% by weight of cement, based on the dry weight of the concrete compositions,
with the proviso that the cement consists of quick-setting cement and one or more portland cements,
wherein the quick-setting cement is selected from the group comprising aluminate cement, calcium sulfoaluminate cements and alumina cement, and
wherein the concrete compositions are based to an extent of 25% to 55% by weight on quick-setting cement, based on the total weight of the cement used overall.

3. Concrete compositions for production of foamed concrete according to Claim 2, **characterized in that** one or more air pore formers are ammonium salts or alkali metal salts of the hydrogen-carbonates or carbonates.

4. Concrete compositions for production of foamed concrete according to Claim 2 or 3, **characterized in that** foam stabilizers present are
one or more surfactants selected from the group comprising olefinsulfonic acids; fatty acids or salts thereof; fatty alcohols; alkylphenols or hydroxyalkylphenols; alkyl and alkylaryl ether sulfates; alkylsulfonates, alkylarylsulfonates; esters or monoesters of sulfosuccinic acid; partial phosphoric esters; alkyl polyglycol ethers; alkylaryl polyglycol ethers; ethylene oxide/propylene oxide (EO/PO) block copolymers; N-methyltaurides; fatty acid alkylolamides; amine oxides; or phosphine oxides; sodium cocoyl dimethylaminoacetate; sulfobetaine and phosphoric esters; or one or more polymers selected from the group comprising polyvinyl alcohols; polyvinylacetals; polyvinylpyrrolidones; polysaccharides in water-soluble form; lignosulfonates; poly(meth)acrylic acid; copolymers of (meth)acrylates with carboxy-functional comonomer units; poly(meth)acrylamide; polyvinyl sulfonic acids and water-soluble copolymers thereof; sulfonated melamineformaldehyde; sulfonated naphthalene-formaldehyde;
styrene-maleic acid copolymers; and vinyl ether-maleic acid copolymers; or
one or more proteins selected from the group comprising casein, caseinate, soya protein; gelatin; and other proteins obtainable by protein hydrolysis of animal proteins; or
enzymes of biotechnological origin.

5. Concrete compositions for production of foamed concrete according to Claims 2 to 4, **characterized in that** the concrete compositions are based to an extent of 0.5% to 20% by weight on protective colloid-stabilized polymers of ethylenically unsaturated monomers, based on the dry weight of the concrete compositions.

6. Concrete compositions for production of foamed concrete according to Claims 2 to 5, **characterized in that** the polymers of ethylenically unsaturated monomers are based on one or more monomers selected from the group comprising vinyl esters, (meth)acrylic esters, vinylaromatics, olefins, 1,3-dienes and vinyl halides.

7. Concrete compositions for production of foamed concrete according to Claims 2 to 6, **characterized in that** 35% to 45% by weight of quick-setting cement is present, based on the total weight of cement present overall,
wherein quick-setting cement is selected from the group comprising aluminate cement, calcium sulfoaluminate cements and alumina cement.

8. Concrete compositions for production of foamed concrete according to Claims 2 to 7, **characterized in that** the concrete compositions are free of fillers.

9. Process for producing foamed concrete according to Claim 1, **characterized in that** a concrete composition according to Claims 2 to 8 is used.

10. Process for producing foamed concrete according to Claim 1 or 9, **characterized in that** air is introduced by blowing air into the aqueous concrete compositions and/or by mechanically mixing the aqueous concrete compositions with air.

11. Process for producing foamed concrete according to Claim 1, 9 or 10, **characterized in that** the aqueous concrete compositions are produced by mixing a mixture comprising one or more foam stabilizers, one or more protective colloid-stabilized polymers of ethylenically unsaturated monomers in the form of aqueous dispersions or water-redispersible powders, optionally one or more air pore formers, optionally one or more additives and water with 30% to 95% by weight of cement, based on the dry weight of the components for production of the concrete compositions, optionally one or more fillers and optionally one or more additives.

12. Process for producing foamed concrete according to Claim 1, 9 or 10, **characterized in that** the aqueous concrete compositions are produced by mixing one or more protective colloid-stabilized polymers of ethylenically unsaturated monomers in the form of aqueous dispersions or water-redispersible powders, optionally fibers and optionally additives and water to produce a mixture a1) and then adding to mixture a1) one or more foam stabilizers, optionally one or more air pore formers and optionally additives to obtain mixture a2), and
mixing mixture a2) with a mixture b) containing 30% to 95% by weight of cement, based on the dry weight of the components for production of the concrete compositions, optionally fillers, optionally fibers and optionally additives.

13. Process for producing foamed concrete according to Claim 12, **characterized in that** mixture b) is a dry mixture.

14. Process for producing foamed concrete according to Claim 12 or 13, **characterized in that** air pores are generated by introducing air into mixture a2).

15. Method of applying the foamed concrete from Claim 1 or 9 to 14 by application to a base or by introduction into a molded part.

16. Method of applying the foamed concrete according to Claim 15 for production of precast concrete parts, floors, flat roofs, terraces, ground slabs, walls; or for coating of walls, floors or screeds; or in concrete formwork; as filler material; or for infilling of bricks.

## Revendications

1. Procédé pour la fabrication de béton cellulaire, dans lequel des pores d'air sont introduits au moyen d'un ou de plusieurs agents de formation de pores d'air et/ou par introduction d'air dans des compositions aqueuses de béton,
les compositions aqueuses de béton étant à base d'un ou de plusieurs stabilisants de mousse,
d'un ou de plusieurs polymères, stabilisés par un colloïde de protection, de monomères éthyléniquement insaturés sous forme de dispersions aqueuses ou de poudres redispersibles dans l'eau,
de 30 à 95% en poids de ciment, par rapport au poids sec des composants pour la préparation des compositions de béton,
le cas échéant d'une ou de plusieurs charges et le cas échéant d'un ou de plusieurs additifs,
à condition que le ciment soit constitué par du ciment à prise rapide et d'un ou de plusieurs ciments de Portland, le ciment à prise rapide étant choisi dans le groupe comprenant le ciment d'aluminate, les ciments de sulfoaluminate de calcium et le ciment hautement alumineux et
les compositions de béton étant, à raison de 25 à 55% en poids, à base de ciment à prise rapide, par rapport au poids total du ciment utilisé au total.

2. Compositions de ciment pour la préparation de béton cellulaire à base d'un ou de plusieurs stabilisants de mousse, d'un ou de plusieurs agents de formation de pores d'air,
le cas échéant d'une ou de plusieurs charges et le cas échéant d'un ou de plusieurs additifs, **caractérisées en ce qu'**un ou plusieurs polymères, stabilisés par un colloïde de protection, de monomères éthyléniquement insaturés sous forme de dispersions aqueuses ou de poudres redispersibles dans l'eau et 30 à 95% en poids de ciment, par rapport au poids sec des compositions de béton, sont contenus,
à condition que le ciment soit constitué par du ciment à prise rapide et d'un ou de plusieurs ciments de Portland, le ciment à prise rapide étant choisi dans le groupe comprenant le ciment d'aluminate, les ciments de sulfoaluminate de calcium et le ciment hautement alumineux et
les compositions de béton étant, à raison de 25 à 55% en poids, à base de ciment à prise rapide, par rapport au poids total du ciment utilisé au total.

3. Compositions de béton pour la fabrication de béton cellulaire selon la revendication 2, **caractérisées en ce qu'**il s'agit, pour un ou plusieurs agents de formation de pores d'air, de sels d'ammonium ou de métal alcalin des hydrogénocarbonates ou des carbonates.

4. Compositions de béton pour la fabrication de béton cellulaire selon la revendication 2 ou 3, **caractérisées en ce qu'**elles contiennent, comme stabilisants de mousse, un ou plusieurs tensioactifs choisis dans le groupe comprenant les acides oléfinesulfoniques ; les acides gras ou leurs sels ; les alcools gras ; les alkylphénols ou les hydroxyalkylphénols ; les alkyléthersulfates et les alkylaryléthersulfates ; les alkylsulfonates, les alkylarylsulfonates ; les esters ou les semi-esters de l'acide sulfosuccinique ; les esters partiels de l'acide phosphorique ; les alkylpolyglycoléthers ; les alkylarylpolyglycoléthers ; les copolymères séquencés d'oxyde d'éthylène/oxyde de propylène (OE/PO) ; les N-méthyltaurides ; les alkylolamides d'acides gras ; les oxydes d'amine ; ou les oxydes de phosphine ; l'acide gras de coco-diméthylamino-acide acétique sodique ; la sulfobétaïne et les esters de l'acide phosphorique ; ou un ou plusieurs polymères choisis dans le groupe comprenant les poly(alcools vinyliques) ; les polyvinylacétals ; les polyvinylpyrrolidones ; les polysaccharides sous forme soluble dans l'eau ; les sulfonates de lignine ; les poly(acides (méth)acryliques) ; les copolymères de (méth)acrylates avec des motifs comonomères à fonctionnalité carboxyle ; le poly(méth)acrylamide ; les poly(acides vinylsulfoniques) et leurs copolymères solubles dans l'eau ; les mélamine-formaldéhyde-sulfonates ; les naphtalène-formaldéhyde sulfonates ; les copolymères de styrène-acide maléique ; et les copolymères de vinyléther-acide maléique ; ou
une ou plusieurs protéines choisies dans le groupe comprenant la caséine, le caséinate, la protéine de soja ; la gélatine ; et d'autres protéines pouvant être obtenues par hydrolyse protéinique de protéines animales ; ou des enzymes d'origine biotechnologique.

5. Compositions de béton pour la fabrication de béton cellulaire selon la revendication 2 à 4, **caractérisées en ce que** les compositions de béton sont, à raison de 0,5 à 20% en poids, à base de polymères stabilisés par un colloïde de protection de monomères éthyléniquement insaturés, par rapport au poids sec des compositions de béton.

6. Compositions de béton pour la fabrication de béton cellulaire selon la revendication 2 à 5, **caractérisées en ce que** les polymères de monomères éthyléniquement insaturés sont à base d'un ou de plusieurs monomères choisis dans le groupe comprenant les esters de vinyle, les esters de l'acide (méth)acrylique, les aromatiques de vinyle, les oléfines, les 1,3-diènes et les halogénures de vinyle.

7. Compositions de béton pour la fabrication de béton cellulaire selon la revendication 2 à 6, **caractérisées en ce qu'**elles contiennent 35 à 45% en poids de ciment à prise rapide, par rapport au poids total du ciment contenu au total, le ciment à prise rapide étant choisi dans le groupe comprenant le ciment d'aluminate, les ciments de sulfoaluminate de calcium et le ciment hautement alumineux.

8. Compositions de béton pour la fabrication de béton cellulaire selon la revendication 2 à 7, **caractérisées en ce que** les compositions de béton sont exemptes de charges.

9. Procédé pour la fabrication de béton cellulaire selon la revendication 1, **caractérisé en ce qu'**une composition de béton selon la revendication 2 à 8 est utilisée.

10. Procédé pour la fabrication de béton cellulaire selon la revendication 1 ou 9, **caractérisé en ce que** l'introduction d'air est effectuée par insufflation d'air dans les compositions aqueuses de béton et/ou par mélange mécanique des compositions aqueuses de béton avec de l'air.

11. Procédé pour la fabrication de béton cellulaire selon la revendication 1, 9 ou 10, **caractérisé en ce que** la préparation des compositions aqueuses de béton est effectuée **en ce qu'**un mélange contenant un ou plusieurs stabilisants de mousse,
un ou plusieurs polymères, stabilisés par un colloïde de protection, de monomères éthyléniquement insaturés sous forme de dispersions aqueuses ou de poudres redispersibles dans l'eau,
le cas échéant un ou plusieurs agents de formation de pores d'air,
le cas échéant un ou plusieurs additifs et de l'eau est mélangé avec 30 à 95% en poids de ciment, par rapport au poids sec des composants pour la préparation des compositions de béton, le cas échéant une ou plusieurs charges et le cas échéant un ou plusieurs additifs.

12. Procédé pour la fabrication de béton cellulaire selon la revendication 1, 9 ou 10, **caractérisé en ce que** la préparation des compositions aqueuses de béton est effectuée **en ce que**, par mélange d'un ou de plusieurs polymères, stabilisés par un colloïde de protection, de monomères éthyléniquement insaturés sous forme de dispersions aqueuses ou de poudres redispersibles dans l'eau, le cas échéant de fibres et le cas échéant d'additifs ainsi que d'eau, un mélange a1) est préparé et
ensuite, on introduit en mélangeant dans le mélange a1), un ou plusieurs stabilisants de mousse, le cas échéant un ou plusieurs agents de formation de pores d'air et le cas échéant des additifs, suite à quoi un mélange a2) est obtenu et
le mélange a2) est mélangé avec un mélange b) contenant 30 à 95% en poids de ciment, par rapport au poids sec des composants pour la préparation des compositions de béton, le cas échéant des charges, le cas échéant des fibres et le cas échéant des additifs.

13. Procédé pour la fabrication de béton cellulaire selon la revendication 12, **caractérisé en ce que** le mélange b) est un mélange sec.

14. Procédé pour la fabrication de béton cellulaire selon la revendication 12 ou 13, **caractérisé en ce que** de l'air est introduit dans le mélange a2) pour la formation de pores d'air.

15. Procédé pour l'application du béton cellulaire selon la revendication 1 ou 9 à 14 par application sur un substrat ou par introduction dans un moule.

16. Procédé pour l'application du béton cellulaire selon la revendication 15 pour la fabrication d'éléments préfabriqués en béton, de sols, de toits plats, de terrasses, de dalles de sol, de murs ; ou pour le revêtement de murs, de sols ou de chapes ; ou dans la construction de coffrages en béton ; comme matériau de remplissage ; ou pour le remplissage de briques.
